# FASCICULE DE BREVET EUROPEEN

(11) **EP 3 001 851 B1**
(45) Date de publication et mention de la délivrance du brevet: **18.10.2017**
(21) Numéro de dépôt: 14719774.3
(22) Date de dépôt: 28.04.2014
(51) Int. Cl.: F16B 39/04, F16B 39/284

(54) **BOULON DE FIXATION A BLOCAGE POSITIF**
BEFESTIGUNGSBOLZEN FÜR POSITIVE VERRIEGELUNG
ATTACHMENT BOLT FOR POSITIVE LOCKING

(30) Priorité: 02.05.2013 FR 1354049
(43) Date de publication de la demande: 06.04.2016
(73) Titulaire: Lisi Aerospace, 75583 Paris Cedex 12 (FR)
(72) Inventeur: PAILHORIES, Guy, Villefranche de Rouergue (FR)
(74) Mandataire: Maupilier, Didier
(86) Numéro de dépôt international: PCT/EP2014/058563
(87) Numéro de publication internationale: WO 2014/177499

(56) Documents cités:
- WO-A1-2011/004104
- DE-C- 225 045
- FR-A- 546 336
- FR-A- 716 549
- FR-A1- 2 955 632
- GB-A- 497 872
- GB-A- 1 048 382
- US-A- 1 099 510
- US-A- 2 940 495
- US-A1- 2010 080 666

## Description

La présente invention se rapporte à un boulon de fixation comprenant une vis et un écrou, muni d'un dispositif de sécurité empêchant tout desserrage de l'écrou sur la vis.

Dans le domaine aéronautique, par exemple pour les attaches des moteurs aux structures d'aéronefs, il est nécessaire d'assurer aux fixations un haut niveau de sécurité face aux risques de desserrage, malgré les vibrations importantes auxquelles elles sont soumises. A cette fin, la tension installée dans un écrou lors de son serrage sur une vis doit être conservée en toutes circonstances, y compris après une période d'utilisation durant laquelle lesdites fixations ont pu être démontées puis remontées plusieurs fois.

Il est connu d'utiliser des écrous crénelés associés à des vis présentant des trous de goupille, comme par exemple décrits dans le document FR2955632.

Dans un tel dispositif, l'écrou comporte une jupe taraudée ayant subi un freinage par déformation elliptique, c'est-à-dire que la section initialement circulaire de la jupe est légèrement aplatie. Lors du serrage sur les filets d'une vis de section circulaire, la jupe est contrainte de reprendre une telle forme circulaire, ce qui installe dans les filets une tension qui s'oppose au desserrage de l'écrou.

Par ailleurs, la jupe présente une extrémité formant des créneaux, dans lesquels vient s'insérer une goupille logée dans un trou traversant une extrémité de la vis. La présence de la goupille empêche également l'écrou de bouger en rotation autour de la vis.

De tels dispositifs présentent cependant un risque important de grippage du fait de l'interférence entre l'écrou et la vis créée par la déformation de l'écrou. En effet, les créneaux de l'écrou ou la jupe taraudée, déformés par le freinage, risquent de pénétrer dans des chanfreins de sortie des trous de goupille, lors du montage de l'écrou sur la vis. Le risque est présent dans le cas d'ensembles vis/écrou en acier et est encore plus important pour les ensembles vis/écrou dont l'un au moins est en titane, pour lesquels le phénomène de grippage est accentué du fait de ses mauvaises propriétés tribologiques.

Par ailleurs, des tests de vibration ont mis en évidence des cas de rupture fragile des créneaux de fixations existantes.

En outre, la pratique montre que dans de tels dispositifs la déformation elliptique imposée initialement à la jupe taraudée présente une tendance forte à s'atténuer à la suite des différentes opérations de démontage et de remontage de la fixation considérée, de sorte que l'on constate une chute significative du couple de freinage normalement engendré par cette déformation. En effet, dans certains écrous de freinage de l'art antérieur, la première installation de l'écrou sur la vis provoque une déformation inverse importante dudit écrou vers une section circulaire. Lorsque l'écrou est démonté, puis remonté, cette déformation plastique provoque une chute importante du couple de freinage.

Afin de conserver le principe de double sécurisation contre le desserrage intempestif, et ce, malgré l'effet des opérations de montage et de démontage des fixations considérées, il a donc été recherché une alternative à la solution consistant en l'association d'un écrou crénelé traditionnel et d'une vis comportant un trou de goupille.

Une première piste consiste à faire porter un créneau par la vis et des trous de goupille par l'écrou, comme dans le dispositif décrit dans le document US1099510. Ce document décrit une vis dont une face d'extrémité comporte une fente recevant une goupille, ladite goupille passant par des trous portés par des flancs latéraux d'un écrou associé.

Cependant, le dispositif du document US1099510 est manifestement inadapté à une utilisation aéronautique et sa forme rend impossible un freinage par déformation elliptique. Par ailleurs il ne résout pas le problème engendré par des opérations successives de montage et de démontage. Les caractéristiques du préambule de la revendication 1 sont déjà utilisées en combinaison dans le document DE 225045 C. Un objet de l'invention est de résoudre les problèmes exposés précédemment en proposant un boulon de fixation à double sécurité anti-desserrage, ne présentant pas les inconvénients des écrous crénelés connus de l'art antérieur.

A cet effet l'invention a pour objet un boulon de fixation, comprenant une vis, ladite vis comportant une tête, une portion filetée disposée selon un premier axe et une portion terminale, ladite portion terminale étant adjacente selon le premier axe à la portion filetée, ladite portion terminale ayant un diamètre inférieur à un diamètre minimal de la portion filetée, une face d'extrémité de ladite portion terminale comprenant une rainure transversale débouchante ; le boulon comprenant en outre un écrou comportant lui-même une face frontale d'appui, un corps taraudé disposé selon un second axe comprenant une cheminée taraudée, ainsi qu'une couronne non taraudée adjacente au corps taraudé selon le second axe, du côté opposé à la face d'appui ; ladite couronne étant percée d'au moins deux trous latéraux, diamétralement opposés ; le boulon comprenant par ailleurs une goupille, apte à s'insérer dans la rainure de la vis et dans les deux trous latéraux de l'écrou.

Selon l'invention, l'écrou est issu d'un procédé comprenant une déformation elliptique de la cheminée à partir d'une forme circulaire.

Par ailleurs, le rapport entre le diamètre extérieur de la cheminée avant déformation et le diamètre nominal de l'écrou est compris entre 1,30 et 1,35.

En outre, le rapport entre la hauteur de la cheminée taraudée et le diamètre nominal de l'écrou est supérieur ou égal à 0,65.

Avantageusement, le premier rapport de diamètre garantit une rigidité de paroi idéale, tandis que le deuxième rapport de diamètre garantit une flexibilité de paroi minimale.

Dans cette configuration, il est possible de réaliser une double sécurisation, par freinage de l'écrou et par blocage au moyen d'une goupille, sans faire face aux inconvénients liés aux créneaux de l'écrou de l'art antérieur.

Par ailleurs, la rainure de la vis et les trous latéraux de l'écrou sont plus facile à usiner que l'écrou crénelé, qui nécessite une délicate opération d'ébavurage. La formation des trous au niveau de la couronne de l'écrou est simplifiée par le fait que la couronne ne comporte pas de taraudage, contrairement au cas du document US1099510.

En outre, les caractéristiques de hauteur et de diamètre de la cheminée confèrent à cette dernière une élasticité accrue par rapport aux écrous de l'art antérieur qui permet d'augmenter le nombre de cycles d'utilisation possibles du boulon selon l'invention. En favorisant l'élasticité de l'écrou, on obtient ainsi avantageusement une stabilité du couple de freinage au cours de plusieurs cycles de démontage/remontage de l'écrou sur la vis.

De manière préférentielle, un diamètre intérieur minimal de la couronne elliptique non taraudée est supérieur à un diamètre de la portion terminale de la vis. Par « diamètre intérieur minimal », on entend le plus petit diamètre de l'ellipse. Ainsi, même en tenant compte de la déformation elliptique de la couronne, on élimine tout risque de coincement des bords de la rainure de la vis dans les trous de la couronne ou dans la cheminée déformée lors du montage de l'écrou sur la vis.

De manière préférentielle également, un plus petit diamètre externe de ladite cheminée est inférieur à un diamètre externe minimal de la portion d'entraînement ;
Préférentiellement, une longueur de la portion d'entraînement selon le second axe est inférieure au tiers d'une longueur totale du corps taraudé selon ledit axe. Ainsi, la masse de l'écrou est allégée, sans altérer ses propriétés élastiques.

Selon un mode de réalisation particulier, l'écrou est issu d'un procédé comprenant une déformation elliptique de la cheminée taraudée et de la couronne à partir d'une forme circulaire.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 : une vue éclatée d'un boulon de fixation selon un mode de réalisation de l'invention ;
- Figure 2 : une vue en coupe d'un élément du boulon de la figure 1 après déformation elliptique ;
- Figure 3 : une vue en coupe d'un élément du boulon de la figure 1 avant déformation elliptique.

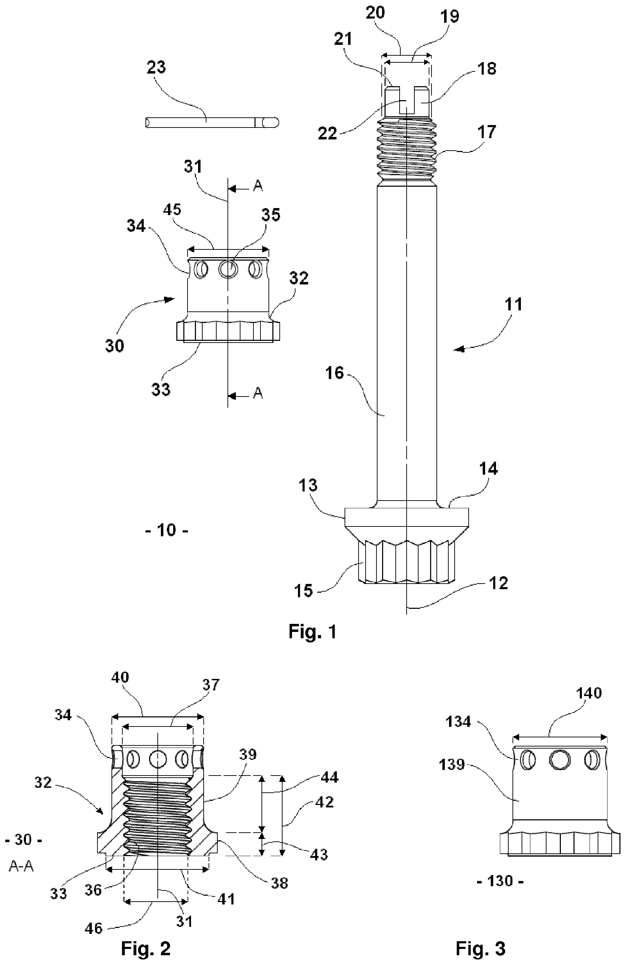

La figure 1 montre une vue latérale d'un boulon de fixation selon un mode de réalisation de l'invention, sous forme non assemblée.

Le boulon 10 comprend une vis 11, disposée selon un premier axe 12. La vis 11 comporte une tête 13, ladite tête 13 possédant une surface 14 d'appui, apte à entrer en contact avec une structure à assembler. La tête 13 possède en outre une surface 15 latérale d'entraînement, apte à coopérer avec un outil d'assemblage. Dans l'exemple de la figure 1, la surface 15 a une forme dite « bi-hexagonale » ou « à 12 dents ».

La tête 13 est prolongée selon l'axe 12 par un fût 16 cylindrique. Le fût 16 est lui-même prolongé par une portion 17 filetée. Une extrémité de la vis 11 opposée à la tête est formée par une portion 18 terminale, qui prolonge la portion 17 filetée selon l'axe 12. La portion 18 terminale a une surface latérale lisse, de diamètre 19 inférieur à un diamètre 20 minimal de la portion 17 filetée. Par « diamètre minimal », on entend le diamètre à fond de filet de la portion 17 filetée.

Une face 21 d'extrémité de ladite portion terminale comprend une rainure 22 transversale débouchante. Cette rainure est apte à accueillir une goupille 23 lorsque le boulon 10 est assemblé.

Comme il est visible sur la figure 1, la rainure 22 a une section en créneau mais des variantes de forme sont possibles.

Par ailleurs, le boulon 10 comprend un écrou 30 disposé selon un second axe 31. Lorsque le boulon 10 est assemblé, le premier axe 12 et le second axe 31 sont confondus.

L'écrou 30 comporte un corps 32 dont une extrémité selon l'axe 31 porte une face 33 frontale d'appui, apte à entrer en contact avec une structure à assembler. Une autre extrémité du corps 32 est prolongée par une couronne 34, ladite couronne étant percée d'au moins deux trous 35 latéraux, diamétralement opposés. Les trous 35 sont aptes à recevoir la goupille 23 lorsque le boulon 10 est assemblé.

La figure 2 représente une vue en coupe de l'écrou 30, selon un plan de coupe A-A, passant par l'axe 31 et perpendiculaire au plan de la figure 1.

Un taraudage 36 est formé sur une face interne du corps 32. Le taraudage 36 est apte à coopérer avec la portion 17 filetée de la vis 11 lors du montage de l'écrou sur la vis.

La couronne 34 qui surmonte le corps 32 n'est pas taraudée et un diamètre 37 interne de ladite couronne est préférentiellement supérieur à un diamètre à fond de filet du taraudage 36.

Le corps 32 taraudé de l'écrou comporte une portion 38 d'entraînement, proche de la face 33 d'appui. Une surface latérale externe de ladite portion 38 est apte à coopérer avec un outil d'assemblage de l'écrou sur la vis. Dans l'exemple des figures 1 et 2, la portion 38 d'entraînement a une forme « bi-hexagonale » ou « à 12 dents ».

Le corps 32 comporte en outre une cheminée 39, située entre la portion 38 d'entraînement et la couronne 34.

La cheminée 39 est préférentiellement choisie de faible épaisseur. Plus particulièrement, un plus petit diamètre 40 externe de la cheminée est inférieur à un diamètre 41 externe minimal de la portion 38 d'entraînement.

Une hauteur totale 42 du corps taraudé 32 selon l'axe 31, entre la face 33 d'appui et une extrémité du filetage 36, est égale à une hauteur 43 de la portion 38 d'entraînement ajoutée à une hauteur 44 de la cheminée 39.

Par ailleurs, la cheminée 39, et éventuellement la couronne 34, ont une forme ovale ou elliptique. Plus précisément, le diamètre 40 externe de la cheminée et éventuellement celui de la couronne, tel que visible sur la figure 2, sont légèrement inférieurs au diamètre externe 45 de la couronne 34, tel que visible sur la figure 1.

Le diamètre 40 représente le plus petit diamètre de l'ellipse formée par un bord externe de la couronne 34 et le diamètre 45 représente le plus grand diamètre de ladite ellipse.

Cette forme elliptique est réalisée au cours de la fabrication de l'écrou 30, à partir d'un écrou 130 représenté sur la figure 3. La cheminée 139 et la couronne 134 de l'écrou 130 ont une section de forme circulaire.

La déformation elliptique de l'écrou 130 est réalisée de manière connue, par pincement ou aplatissement de la cheminée 139 et éventuellement de la couronne 134, avant un traitement thermique. Une méthode analogue est par exemple décrite dans le document EP2452082.

De préférence, la déformation elliptique est réalisée à mi-hauteur de la cheminée 139, c'est-à-dire à égale distance de la portion d'entraînement et de la couronne 134.

La forme elliptique du taraudage de la cheminée 39 assure le blocage de l'écrou 30 sur la vis 11, par freinage, lorsque le boulon 10 est assemblé. Le boulon 10 dispose donc d'une double sécurité anti-desserrage : d'une part le freinage, d'autre part le système de blocage par la goupille 23.

De manière connue, il est souhaitable que le petit diamètre 40 de l'ellipse soit suffisamment étroit pour assurer la fonction de freinage, mais sans que la déformation ne dépasse la limite élastique du matériau constituant l'écrou. Ainsi, lors de la première introduction d'une vis dans l'écrou 30, l'écrou se déformera élastiquement et non plastiquement.

De préférence, le diamètre 37 interne de la couronne 34, qui correspond au plus petit diamètre de l'ellipse, est supérieur au diamètre 19 de la portion terminale de la vis 11. Ainsi, il n'y a pas de risque de coincement des bords de la rainure 22 dans les trous 35 lors du montage de l'écrou 30 sur la vis 11.

Par rapport à la hauteur totale 42, selon l'axe 31, du corps 32 taraudé, la cheminée 39 est plus haute que les cheminées des écrous de l'art antérieur, comme par exemple l'écrou crénelé du document FR2955632.

Par ailleurs, le diamètre extérieur 140 de la cheminée 139 avant déformation et un diamètre 46 nominal de l'écrou ont un rapport compris entre 1,30 et 1,35. Le rapport entre le diamètre 140 et le diamètre 46 est par exemple égal à 1,33.

De plus, le rapport entre la hauteur 44 de la cheminée 39 et le diamètre 46 nominal de l'écrou est supérieur ou égal à 0,65.

Par « diamètre nominal de l'écrou » on entend une valeur indiquant la taille de l'écrou, par exemple 6 mm ou ¼ de pouce. Le diamètre nominal correspond à un minimum du diamètre à fond de filet de l'écrou selon la norme AS8879. Dans le cadre de la présente invention, ce diamètre minimum est mesuré dans la portion d'entraînement, qui ne subit pas de déformation en cours de fabrication.

Ces caractéristiques de hauteur et de diamètre de la cheminée 39 confèrent avantageusement à cette dernière une élasticité qui lui permet de se déformer de manière circulaire lors du montage de l'écrou sur la vis, puis de retrouver sa forme elliptique lors du démontage. Le boulon 10 a ainsi un comportement stable sur de nombreux cycles d'installation.

Selon une autre forme préférentielle de l'invention, la hauteur 43 de la portion 38 d'entraînement est inférieure ou égale au tiers de la hauteur totale 42 du corps taraudé. Ainsi, la hauteur d'entraînement est suffisante pour permettre le passage du couple de serrage sans alourdir l'écrou.

Le boulon 10 de la figure 1 a notamment été comparé à des boulons de l'art antérieur avec freinage par déformation elliptique de l'écrou comme dans le document FR2955632.

Les boulons ont été soumis à des tests de montage/démontage selon la norme NFL22-500 : Couple maximal au vissage : 6,6 N.m ; couple de serrage : 43 N.m ; couple minimal au dévissage : 1,16 N.m. Les tests ont été réalisés sur banc de mesure automatique, à 10 tours/mn.

Dans les boulons de l'art antérieur, au bout de cinq cycles de montage/démontage, le petit diamètre d'ellipse de la déformation elliptique de l'écrou a augmenté significativement, et n'assure plus une fonction de freinage suffisante. L'écrou se déforme plastiquement lorsqu'il est monté sur la vis.

Au contraire, de manière surprenante, des écrous 30 en acier conservent une forme elliptique sans déformation plastique du petit diamètre d'ellipse au bout de cinquante cycles de montage/démontage sur des vis 11 en alliage de titane TA6V revêtues et lubrifiées, par exemple avec du revêtement HI-KOTE® NC distribué par la société Hi-Shear Corp et de l'alcool céthylique. Le plus petit diamètre interne 37 de l'ellipse a été mesuré sur dix écrous 30 neufs, ainsi que sur dix écrous 30 ayant subi cinquante cycles de montage/démontage. Les résultats sont reportés dans le tableau 1 ci-dessous :

**Tableau 1**

| **Petit diamètre (mm)** | **1** | **2** | **3** | **4** | **5** | **6** | **7** | **8** | **9** | **10** | **Moyenne** |
|---|---|---|---|---|---|---|---|---|---|---|---|
| Ecrou neuf | 12,9 | 12,9 | 12,8 | 12,9 | 13,0 | 13,0 | 13,0 | 12,9 | 12,9 | 13,0 | **12,93** |
| Ecrou après 50 cycles | 12,9 | 13,0 | 13,1 | 12,9 | 12,9 | 13,0 | 13,0 | 12,8 | 12,9 | 12,9 | **12,94** |

Les résultats ci-dessus montrent que les dimensions de l'ellipse formée par la cheminée 39 et la couronne 34 ne varient quasiment pas sur cinquante cycles de montage/démontage sur une vis 11.

Par rapport aux écrous de l'art antérieur, la hauteur et le diamètre de la cheminée 39 permettent donc d'augmenter l'élasticité dudit écrou, de sorte que la limite de déformation élastique n'est pas dépassée lors du montage de l'écrou sur la vis. La forme elliptique est ainsi conservée, ce qui assure une stabilité du couple de freinage vis/écrou au cours de cycles répétés de montage/démontage.

Des tests équivalents ont été réalisés sur des écrous 30 et des vis 11 en alliage de titane TA6V, chacun desdits éléments étant revêtu de manière appropriée. Un revêtement approprié est par exemple un film solide lubrifiant comme du MoS2 ou un revêtement anti-corrosion pigmenté comme les revêtements HI-KOTE® ou Kalgard® FA. Les résultats montrent que les écrous en alliage de titane TA6V supportent au moins quinze cycles de montage/démontage sur des vis en alliage de titane TA6V.

## Revendications

1. Boulon (10) de fixation, comprenant :
- Une vis (11), ladite vis comportant une tête (13), une portion (17) filetée disposée selon un premier axe (12) et une portion (18) terminale, ladite portion terminale étant adjacente selon le premier axe à la portion filetée, ladite portion terminale ayant un diamètre (19) inférieur à un diamètre (20) minimal de la portion filetée, une face (21) d'extrémité de ladite portion terminale comprenant une rainure (22) transversale débouchante ;
- Un écrou (30) comportant une face (33) frontale d'appui, un corps (32) taraudé disposé selon un second axe (31) comprenant une cheminée (39) taraudée, et une couronne (34) non taraudée, adjacente au corps taraudé selon le second axe, du côté opposé à la face d'appui ; ladite couronne étant percée d'au moins deux trous (35) latéraux, diamétralement opposés;
- Une goupille (23), apte à s'insérer dans la rainure de la vis et dans les deux trous latéraux de l'écrou ;
ledit boulon étant **caractérisé en ce que** :
- l'écrou est issu d'un procédé comprenant une déformation ovale ou elliptique de la cheminée taraudée à partir d'une forme (139) circulaire,
- le rapport entre le diamètre extérieur (140) de la cheminée (139) avant déformation et le diamètre (46) nominal de l'écrou est compris entre 1,30 et 1,35; et
- le rapport entre la hauteur (44) de la cheminée (39) et le diamètre nominal de l'écrou est supérieur ou égal à 0,65.

2. Boulon de fixation selon la revendication 1, tel que le corps (32) taraudé de l'écrou comporte une portion (38) d'entraînement, proche de la face frontale d'appui (33), une surface latérale externe de ladite portion (38) étant apte à coopérer avec un outil d'assemblage.

3. Boulon de fixation selon la revendication 2, tel que la cheminée (39) est disposée entre la portion d'entraînement (38) et la couronne (34).

4. Boulon de fixation selon la revendication 1 ou 2, tel qu'un plus petit diamètre (40) externe de la cheminée (39) déformée elliptiquement est inférieur à un diamètre (41) externe minimal de la portion d'entraînement (38).

5. Boulon de fixation selon la revendication 1, tel que l'écrou est issu d'un procédé comprenant une déformation elliptique de la cheminée taraudée (39) et de la couronne (34) à partir d'une forme (139) circulaire.

6. Boulon de fixation selon la revendication 5, tel qu'un diamètre intérieur (37) minimal de la couronne elliptique (34) non taraudée est supérieur à un diamètre (19) de la portion terminale de la vis.

7. Boulon de fixation selon l'une des revendications précédentes, tel qu'une longueur (43) de la portion d'entraînement (38) selon le second axe (31) est inférieure ou égale au tiers d'une longueur totale (42) du corps taraudé selon ledit axe.

8. Boulon de fixation selon l'une des revendications précédentes, tel que l'écrou (30) est en acier et la vis (11) en alliage de titane.

9. Boulon de fixation selon l'une des revendications 1 à 7, tel que l'écrou (30) et la vis (11) sont en alliage de titane.

## Patentansprüche

1. Befestigungsbolzen (10), umfassend:
- eine Schraube (11), wobei die Schraube einen Kopf (13), einen Gewindeabschnitt (17), der entlang einer ersten Achse (12) angeordnet ist, und einen Endabschnitt (18) umfasst, wobei der Endabschnitt entlang der ersten Achse an den Gewindeabschnitt angrenzt, wobei der Endabschnitt einen kleineren Durchmesser (19) als ein Mindestdurchmesser (20) des Gewindeabschnitts aufweist, wobei eine Endfläche (21) des Endabschnitts eine durchgehende Quernut (22) umfasst;
- eine Mutter (30), umfassend eine vordere Auflagefläche (33), einen Gewindekörper (32), der entlang einer zweiten Achse (31) angeordnet ist, umfassend einen Gewindeschaft (39), und einen Kranz (34) ohne Gewinde, der an den Gewindekörper entlang der zweiten Achse auf der gegenüberliegenden Seite der Auflagefläche angrenzt; wobei der Kranz durch mindestens zwei seitliche, diametral gegenüberliegende Löcher (35) durchbohrt ist;
- einen Stift (23), der geeignet ist, in die Nut der Schraube und in die zwei seitlichen Löcher der Mutter eingesetzt zu werden;
wobei der Bolzen **dadurch gekennzeichnet ist, dass**:
- die Mutter durch ein Verfahren hergestellt wird, umfassend eine ovale oder elliptische Verformung des Gewindeschaftes aus einer kreisförmigen Form (139),
- das Verhältnis zwischen dem Außendurchmesser (140) des Schaftes (139) vor der Verformung und dem Nominaldurchmesser (46) der Mutter zwischen 1,30 und 1,35 beträgt; und
- das Verhältnis zwischen der Höhe (44) des Schaftes (39) und dem Nominaldurchmesser der Mutter größer oder gleich 0,65 ist.

2. Befestigungsbolzen nach Anspruch 1, wobei der Gewindekörper (32) der Mutter einen Antriebsabschnitt (38) in der Nähe der vorderen Auflagefläche (33) umfasst, wobei eine äußere Seitenfläche des Abschnitts (38) geeignet ist, mit einem Montagewerkzeug zusammenzuwirken.

3. Befestigungsbolzen nach Anspruch 2, wobei der Schaft (39) zwischen dem Antriebsabschnitt (38) und dem Kranz (34) angeordnet ist.

4. Befestigungsbolzen nach Anspruch 1 oder 2, wobei ein kleinerer Außendurchmesser (40) des elliptisch verformten Schaftes (39) kleiner als ein Mindestaußendurchmesser (41) des Antriebsabschnitts (38) ist.

5. Befestigungsbolzen nach Anspruch 1, wobei die Mutter durch ein Verfahren hergestellt wird, umfassend eine elliptische Verformung des Gewindeschaftes (39) und des Kranzes (34) aus einer kreisförmigen Form (139).

6. Befestigungsbolzen nach Anspruch 5, wobei ein Mindestinnendurchmesser (37) des elliptischen Kranzes (34) ohne Gewinde größer als ein Durchmesser (19) des Endabschnitts der Schraube ist.

7. Befestigungsbolzen nach einem der vorhergehenden Ansprüche, wobei die Länge (43) des Antriebsabschnitts (38) entlang der zweiten Achse (31) kleiner oder gleich einem Drittel einer Gesamtlänge (42) des Gewindekörpers entlang der Achse ist.

8. Befestigungsbolzen nach einem der vorhergehenden Ansprüche, wobei die Mutter (30) aus Stahl und die Schraube (11) aus Titanlegierung ist.

9. Befestigungsbolzen nach einem der Ansprüche 1 bis 7, wobei die Mutter (30) und die Schraube (11) aus Titanlegierung sind.

## Claims

1. Attachment bolt (10) comprising:
- a screw (11), said screw comprising a head (13), a threaded portion (17) arranged along a first axis (12) and an end portion (18), said end portion being adjacent to the threaded portion along the first axis, said end portion having a diameter (19) smaller than a minimum diameter (20) of the threaded portion, an end face (21) of said end portion comprising a transverse through-slot (22);
- a nut (30) comprising a frontal bearing face (33), a tapped body (32) arranged along a second axis (31) and comprising a tapped chimney (39) and an untapped crown (34) that is adjacent to the tapped body along the second axis, on the opposite side from the bearing face; at least two diametrically opposite lateral holes (35) being created in said crown;
- a pin (23) that can be inserted into the slot of the screw and into the two lateral holes of the nut;
said bolt being **characterized in that**:
- the nut is created by a process involving oval or elliptic deformation of the tapped chimney starting from a circular shape (139),
- the ratio between the external diameter (140) of the chimney (139) before deformation and the nominal diameter (46) of the nut is between 1.30 and 1.35; and
- the ratio between the height (44) of the chimney (39) and the nominal diameter of the nut is greater than or equal to 0.65.

2. Attachment bolt according to Claim 1, wherein the tapped body (32) of the nut comprises a drive portion (38) close to the frontal bearing face (33), an external lateral surface of said portion (38) being able to engage with an installation tool.

3. Attachment bolt according to Claim 2, wherein the chimney (39) is arranged between the drive portion (38) and the crown (34).

4. Attachment bolt according to Claim 1 or 2, wherein a smaller external diameter (40) of the elliptically deformed chimney (39) is smaller than a minimum external diameter (41) of the drive portion (38).

5. Attachment bolt according to Claim 1, wherein the nut is created by a process involving elliptical deformation of the tapped chimney (39) and of the crown (34) starting from a circular shape (139).

6. Attachment bolt according to Claim 5, wherein a minimum internal diameter (37) of the untapped elliptical crown (34) is greater than a diameter (19) of the end portion of the screw.

7. Attachment bolt according to one of the preceding claims, wherein a length (43) of the drive portion (38) along the second axis (31) is less than or equal to one-third of a total length (42) of the tapped body along said axis.

8. Attachment bolt according to one of the preceding claims, wherein the nut (30) is made of steel and the screw (11) is made of a titanium alloy.

9. Attachment bolt according to one of Claims 1 to 7, wherein the nut (30) and the screw (11) are made of a titanium alloy.
